# EUROPÄISCHE PATENTANMELDUNG

(11) **EP 0 780 154 A1**
(43) Veröffentlichungstag der Anmeldung: **25.06.1997**
(21) Anmeldenummer: 96119693.8
(22) Anmeldetag: 09.12.1996
(51) Int. Cl.: B01J 13/16, B01J 13/14

(54) **Verfahren zur Herstellung abbaubarer Mikrokapseln**

(30) Priorität: 21.12.1995 DE 19548025
(71) Anmelder: BAYER AG, 51368 Leverkusen (DE)
(72) Erfinder: Träubel, Harro, Dr., 51373 Leverkusen (DE); König, Klaus, Dr., 51519 Odenthal (DE)

(57) **Zusammenfassung**

Mikrokapseln mit Wänden, die nach dem Polyadditionsverfahren aus Polyisocyanaten und Polyaminen erhältlich sind und eine terminierbare Festigkeit aufweisen sind dadurch gekennzeichnet, daß bei ihrer Herstellung als mindestens bifunktionelle Isocyanate solche (mit-)verwendet werden, die im Mittel pro Mol mindestens eine Ester- und/oder Amidgruppe in der Hauptkette enthalten.

## Beschreibung

Die vorliegende Erfindung betrifft Mikrokapseln, die nach dem Grenzflächen-Polyadditionsverfahren erhältlich und abbaubar sind. Der Abbau kann z.B. hydrolytisch erfolgen.

Es ist bekannt, Mikrokapseln, z.B. für kohlefreie Durchschreibepapiere, mit Hilfe eines Grenzflächenadditionsverfahrens herzustellen. Dabei werden ein als Leukoverbindung vorliegender Farbstoff und ein mindestens bifunktionelles Isocyanat in einer hydrophoben Flüssigkeit gelöst, dieses hydrophobe Gemisch in Wasser emulgiert, das im allgemeinen einen Stabilisator, d.h. ein als Schutzkolloid wirkendes Mittel (z.B. teilverseiftes Polyvinylacetat) und häufig einen Emulgator, d.h. ein die Obertlächenspannung herabsetzendes Mittel, enthält und dann ein mit dem Isocyanat reaktionsfähiges, wasserlösliches Polyamin zugegeben. An den Grenzflächen der emulgierten hydrophoben Tröpfchen findet dann eine Polyadditionsreaktion statt, bei der sich um die hydrophoben Tröpfchen eine Polyurethanharnstoff-Wand bildet. Abschließend muß häufig eine Nachbehandlung bei erhöhter Temperatur durchgeführt werden. Derartige Verfahren sind beispielsweise beschrieben in der DE-A 3 202 551, EP-A 0 050 264 und US-A 4 193 889.

Die Herstellung möglichst kleiner Kapseln, z.B. von solchen mit mittleren Durchmessern von weniger als 5 µm und/oder die Einsparung von Emulgierungsenergie ist durch die Verwendung von Polyethylenoxid-Ketten enthaltenden Isocyanaten möglich geworden (siehe DE-A 4 130 743).

Die bisher bekannten Mikrokapseln, z.B. die in DE-A 4 130 743 beschriebenen, weisen Wände von guter Stabilität auf, was jedoch nicht immer von Vorteil ist.

Wenn man Altpapier aufarbeitet und erneut zur Papierherstellung einsetzen möchte, so müssen in und auf dem Altpapier vorhandene Fremdstoffe, z.B. Druckfarben, entfernt werden. Dies geschieht im sogenannten De-Inking-Prozeß.

Bei kohlefreien, Mikrokapseln enthaltenden Durchschreibepapieren, die nach Gebrauch erneut zur Papierherstellung verwendet werden sollen, stellt sich die Aufgabe, Mikrokapseln abzubauen. da sonst die erneute Herstellung von Papier negativ beeinflußt (Stippenbildung) oder ganz unmöglich gemacht wird. Dies hat zur Folge, daß man solche Durchschreibepapiere nur mit erheblichen Nachteilen oder gar nicht recyclisieren kann.

Auch auf dem Gebiet der Agrochemikalien werden Mikrokapseln eingesetzt. Dabei ist erwünscht, daß diese den Wirkstoff, z.B. ein Pflanzenschutzmittel über einen längeren Zeitraum hinweg freisetzen. Dies kann erreicht werden, wenn man den Wirkstoff in mikroverkapselter Form zur Anwendung bringt und sich die Mikrokapseln in den damit behandelten Kulturen unter den dort herrschenden Bedingungen langsam abbauen.

Es besteht deshalb ein Bedürfnis, nach Mikrokapseln, die z.B. unter den Bedingungen der Aufarbeitung von Altpapier und unter den in landwirtschaftlichen Kulturen herrschenden Bedingungen abbaubar sind.

Es wurden nun nach dem Polyadditionsverfahren aus Polyisocyanaten und Polyaminen erhältliche Mikrokapseln mit Wänden terminierbarer Festigkeit gefunden, die dadurch gekennzeichnet sind, daß bei ihrer Herstellung als mindestens bifunktionelle Isocyanate solche (mit-)verwendet wurden, die im Mittel pro Mol mindestens eine Ester- und/oder Amidgruppe in der Hauptkette enthalten. Erfindungsgemäß einzusetzende Isocyanate werden im folgenden auch als "Isocyanate A" bezeichnet.

Zur Herstellung erfindungsgemäßer Mikrokapseln kann man z.B. Isocyanate oder Isocyanatgemische verwenden, die 100 bis 1 Gew.-% Isocyanate A und 0 bis 99 Gew.-% für die Herstellung von Mikrokapseln bekannte, mindestens bifunktionelle Isocyanate enthalten. Durch Variation des Verhältnisses der Isocyanate A zu üblichen Isocyanaten kann man die terminierbare Festigkeit erfindungsgemäßer Mikrokapseln beliebig einstellen.

Bevorzugt sind Isocyanate A, bei denen mindestens 2 Isocyanatgruppen über einen organischen Rest verbunden sind, der in der Hauptkette mindestens eine Ester und/oder Amidgruppe enthält. Als Estergruppe wird hierbei auch eine Carbonat- oder Allophanatgruppe, nicht jedoch eine Urethangruppe verstanden.

Weiterhin bevorzugt sind Isocyanate A und Isocyanat A enthaltende Isocyanatgemische, die Emulgatoren enthalten. Die Emulgatoren können dabei als solche den Isocyanaten zugegeben werden (= externe Emulgatoren). Die Emulgatoren können aber auch in die Isocyanate eingebaut sein. Einen derartigen "Emulgatoreinbau" kann man beispielsweise erhalten, indem man einen Teil der vorhandenen Isocyanatgruppen mit zur Salzbildung befähigten und/oder hydrophilierend wirkenden Verbindungen reagieren läßt. Beispielsweise kann man 5 bis 50 %, vorzugsweise 8 bis 30 %, der vorhandenen Isocyanatgruppen so reagieren lassen.

Als zur Salzbildung befähigte und/oder hydrophilierend wirkende Verbindungen kommen beispielsweise Dimethylpropionsäure, N,N-Dimethylethanolamin und hydrophile, vorzugsweise monofunktionelle Polyether in Frage. Gegebenenfalls können Einzelheiten zur Umsetzung von Isocyanaten mit zur Salzbildung befähigten Verbindungen der DE-OS-4 319 517, der EP-OS 0 564 912 oder der DE-OS 4 418 836 entnommen werden.

Isocyanate A können durch Umsetzung mindestens bifunktioneller Isocyanate mit Verbindungen erhalten werden, die OH- und Ester- und/oder Amidgruppen enthalten. Derartige Umsetzungen sind bekannt. Als Ausgangsisocyanate kommen z.B. in Frage:
Diisocyanate wie 1,4-Diisocyanatobutan, 1,6-Diisocyanatohexan, 1,5-Diisocyanato-2,2-dimethylpentan, 2,2,4- und 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat), 4,4'-Diisocyanatodicyclohexylmethan, 2,4- und 2,6-Diisocyanato-methylcyclohexan und deren Gemische. Prinzipiell können auch aromatische Isocyanate, z.B. Toluylendiisocyanate oder 4,4'-Diisocyanato-diphenylmethan eingesetzt werden. Wegen deren geringerer Lichtechtheit und höherer Reaktivität gegenüber Wasser sind jedoch die aliphatischen Isocyanate bevorzugt. Anteilig können auch Polyisocyanate, die durch Modifizierung der oben genannten Diisocyanate oder deren Mischungen nach bekannten Verfahren darstellbar sind und z.B. Uretdion-, Urethan-, Isocyanurat-, Biuret- und/oder Allophanatgruppen enthalten, mit eingesetzt werden.

Als OH- und Ester- und/oder Amidgruppen enthaltende Verbindungen sind z.B. Produkte geeignet, die im Mittel mindestens 2 OH-Gruppen und im Mittel mindestens eine Ester- und/oder Amidgruppe aufweisen.

Geeignet sind z.B. kurzkettige Polyester, wie sie durch Veresterung von Diolen und/oder Triolen mit Dicarbonsäuren und/oder Dicarbonsäureanhydriden oder durch Umesterung von Diolen und/oder Triolen mit Dicarbonsäureestern kurzkettiger monofunktioneller Alkohole und Abdestillation der entstehenden kurzkettigen Alkohole zugänglich sind.

Als Säurekomponenten seien folgenden Verbindungen genannt: Kohlensäuredimethylester, -diethylester und -diphenylester, Ethylenglykolcarbonat, Propylenglykolcarbonat, Oxalsäure- und Malonäurediester, Bernstein-, Glutar- und Maleinsäure sowie deren Anhydride, Adipin-, Sebacin-, (auch hydrierte) Phthal-, Hydroxymono- und -dicarbonsäuren (gegebenenfalls in Form ihrer inneren Ester = Lactone) wie Glykol-, Wein-, Milch-, Zitronen-, Hydroxycapron-, Hydroxybutter- und Ricinolsäure.

Als Diole seien z.B. folgende technisch gut verfügbare genannt: Ethan-, 1,2- und 1,3-Propan-, isomere Butan-, Pentan- und Hexandiole und ethergruppenhaltige Oligo- und Polymere von Ethylen- und Propylenglykol. Auch cycloatiphatische und aromatische Diole seien erwähnt, sie sind aber wegen der hohen Viskosität der Ester nicht bevorzugt. Geeignete Triole sind beispielsweise Glycerin und Trimethylolpropan.

Polyester können z.B. durch Kondensation der Säuren und/oder deren Ester mit monofunktionellen Alkoholen und/oder der Anhydride der Säuren mit den angeführten Di- und/oder Triolen nach bekannten Verfahren gewonnen werden. Durch Einsetzen der OH-Verbindungen im Überschuß und anschließende Extraktion mit Wasser oder durch Kurzwegdestillation kann eine enge Molekulargewichtsverteilung, damit eine niedrige Viskosität und ein geringer Gehalt an nicht Estergruppen tragenden Komponenten eingestellt werden. Ebenfalls gut geeignet ist die ringöffnende Umesterung von Lactonen (beispielsweise Butyro-, Valero- oder Caprolacton). Diese Umesterung kann gegebenenfalls mit den oben genannten Maßnahmen gekoppelt werden.

Besonders geeignete, OH-Gruppen enthaltende Verbindungen können durch Reaktion einer Di- oder Hydroxy-Carbonsäure mit Alkylenoxyd erhalten werden. Dabei entstehen in einfacher Weise definierte, niedermolekulare Esterdiole.

Amidgruppen enthaltende OH-Verbindungen können z.B. aus den genannten Säuren oder deren Estern (auch Lactonen) durch Reaktion mit Hydroxyaminen, die eine sekundäre Aminogruppe enthalten, hergestellt werden. Bei den Hydroxyaminen kann es sich z.B. um Addukte des Ethylenoxyds oder Propylenoxyds an Mono-C₁-C₄-alkylamine handeln.

Diese letztgenannten Addukte sind besonders geeignet, weil sie durch die Selektivität der Aminogruppen als überwiegend definierte Verbindungen hergestellt werden können. Die mittleren Molekulargewichte von OH-Verbindungen, die zur Herstellung von Isocyanaten A geeignet sind, können z.B. im Bereich 148 bis 2 000 liegen. Vorzugsweise betragen die mittleren Molgewichte 148 bis 1 000, insbesondere 148 bis 500.

Zur Herstellung von Isocyanaten A können NCO-enthaltende Verbindungen mit den OH-enthaltenden Komponenten z.B. im NCO/OH-Verhältnis von 1,3 bis 20:1, vorzugsweise 1,5 bis 10:1, eingesetzt werden.

Bei NCO/OH-Verhältnissen von über 1,5:1 bleibt ein beträchtlicher, von der Art des Isocyanats abhängiger Anteil an nicht reagiertem Isocyanat zurück. Aus gewerbehygienischen Gründen sollten diese freien Isocyanate entfernt werden, z.B. durch Dünnschichtdestillation. Hohe NCO/OH-Verhältnisse sind bevorzugt, weil dann viskositätserhöhende Kettenverlängerungsreaktionen weitgehend unterdrückt werden können.

Es können auch Ester der hypothetischen Allophansäure (sogenannte Allophanate) eingesetzt werden, die durch Reaktion einer Urethangruppe mit einer Isocyanatgruppe entstehen können. Wird die Umsetzung der Isocyanate mit den Hydroxylgruppen enthaltenden Verbindungen bei 150°C oder höheren Temperaturen oder in Anwesenheit von Katalysatoren (z.B. Chlorwasserstoffgas oder organischen Zinnverbindungen) vorgenommen, so werden je nach Reaktionszeit die Urethangruppen mehr oder minder vollständig in Allophanatgruppen überführt. Diese Maßnahme bietet den Vorteil, Produkte hohen Isocyanatgehaltes, hoher Funktionalität und niedriger Viskosität zu erhalten, was für die vorgesehene Anwendung von Vorteil ist.

Zur Verbesserung der Wasserdispergierbarkeit können die Isocyanate mit ionischen Gruppen (siehe z.B. DE-OS 4 226 110 und DE-AS 431 957) und/oder mit hydrophilierenden Polyetherketten (siehe z.B. DE-OS 4 211 480) versehen werden. Polyetheraddition und Allophanatisierung können auch in einem Schritt erfolgen.

Der Emulgatorzusatz durch Anreaktion der Polyisocyanate mit hydrophilierenden Komponenten ist gegenüber der Vermischung mit externen Emulgatoren bevorzugt.

Die anderen für die Kapselherstellung benötigten Komponenten, also das einzukapselnde Material, das hydrophobe Lösungsmittel, die waßrige Phase und das Polyamin entsprechen dem Stand der Technik.

Als einzukapselnde Materialen kommen beispielsweise Parfümöle, Pflanzenschutzmittel, Reaktivkleber und Pharmazeutika in Frage. Bevorzugt sind jedoch in Leukoform vorliegende Farbstoffe für das Einsatzgebiet kohlefreier Durchschreibepapiere. Pflanzenschutzmittel mit verzögerter Freisetzung der Wirkstoffe können ebenfalls mit erfindungsgemäßen Mikrokapseln erhalten werden. Bei der Verwendung erfindungsgemäßer Mikrokapseln auf dem Pflanzenschutzgebiet verwendet man als hydrophobe Lösungsmittel vorzugsweise natürliche Öle, z.B. Rizinusöl oder Palmöl.

Für die Verwendung erfindungsgemäßer Mikrokapseln auf dem Gebiet kohlefreier Durchschreibepapiere kommen als zu verkapselnde Farbstoffe in Leukoform (= sogenannte Farbgeber oder colorformer) z.B. Triphenylmethanverbindungen, Diphenylmethanverbindungen, Xanthenverbindungen, Benzoxazinverbindungen, Thiazinverbindungen und Spiropyranverbindungen in Frage, wobei auch Gemische von Farbstoffen in Leukoform von Interesse sind. Als hydrophobe Lösungsmittel für diesen Zweck seien genannt: chloriertes Diphenyl, chloriertes Paraffin, Baumwollsamenöl, Erdnußöl, Palmöl, Trikresylphosphat, Silikonöl, Dialkylphthalate, Dialkyladipate, teilhydrierte Terphenyle, alkyliertes Diphenyl, alkyliertes Naphthalin, Diarylether, Arylalkylether und höher alkyliertes Benzol, sowie beliebige Mischungen dieser hydrophoben Lösungsmittel und Mischungen einzelner oder mehrerer dieser hydrophoben Lösungsmittel mit Kerosin, Paraffinen und/oder Isoparaffinen.

Als Beispiele für Polyamine seien aliphatische primäre und sekundäre Di- und Polyamine genannt.

Die Mengenverhältnisse der einzelnen Komponenten zur Mikrokapselherstellung können ebenfalls dem Stand der Technik entsprechen. Beispielsweise kann man das jeweilige Polyamin in stöchiometrischem Verhältnis zum Isocyanat einsetzen.

Die hydrophobe Phase kann beispielsweise 0,1 bis 10 Gew.-%, vorzugsweise 1 bis 8 Gew.-% einzukapselndes Material, 1 bis 25 Gew.-%, vorzugsweise 4 bis 18 Gew.-% Polyisocyanate und ergänzend zu 100 Gew.-% hydrophobe Lösungsmittel enthalten. Das Gewichtsverhältnis von hydrophober Phase zu Wasserphase kann beispielsweise 10:90 bis 60:40, vorzugsweise 30:70 bis 50:50 betragen.

Die wäßrige Phase kann Stabilisatoren, d.h. als Schutzkolloide wirkende Mittel und/oder viskositätserhöhende Mittel enthalten. Beispiele für solche Mittel sind Gelatine, Polyvinylalkohole, teilverseiftes Polyvinylacetat und Carboxymethylcellulose. Solche Mittel können, bezogen auf die wäßrige Phase, beispielsweise in Mengen von 0,05 bis 5 Gew.-% enthalten sein. Im allgemeinen ist es vorteilhaft, die Mikrokapselbildung bei mäßig erhöhter Temperatur zu Ende zu bringen.

Die Herstellung erfindungsgemäßer Mikrokapseln kann in üblichen Dispersionsapparaturen oder Emulgierapparaturen erfolgen. Man erhält dabei eine Mikrokapseldispersion (Slurry), wobei sich der gelöste Wirkstoff im Inneren von kleinen Mikrohohlkügelchen befindet. Für kohlefreie Durchschreibepapiere wird ein Slurry, gegebenenfalls nach Zusatz eines Bindemittels und/oder sonstiger Hilfsstoffe auf ein Basispapier aufgetragen, was ein sogenanntes coated back paper (CB) ergibt. Das CB wird auf ein sogenanntes coated front paper (CF), das mit einer Schicht überzogen ist, die einen Entwickler für den Farbstoff enthält, aufgelegt. Bei Druckeinwirkung, z.B. durch einen Bleistift, Kugelschreiber oder eine Schreibmaschinentype) öffnen sich die Kapseln auf dem CB an den Stellen, an denen Druck ausgeübt wurde, und der austretende Leukofarbstoff kommt mit dem Entwickler des CF in Berührung. Der austretende Leukofarbstoff entwickelt sich dabei zum Farbstoff und gibt die Druckstelle als Punkt, Strich, Schrift etc. zu erkennen.

Die erfindungsgernäßen Mikrokapseln haben eine Reihe von überraschenden Vorteilen: Sie sind leichter abbaubar als bisher übliche Mikrokapseln, beispielsweise unter den Bedingungen, wie sie in sogenannten De-Inking-Prozessen und agrarischen Kulturen herrschen. Wenn sie ganz oder teilweise aus Isocyanaten mit eingebauten hydrophilierenden Resten hergestellt wurden, kann man auch sehr kleine Kapseln, z.B. Kapseln mit mittleren Durchmessern von 1 bis 10 µm herstellen.

### Beispiele

### Beispiel 1:

a) 2 226 g Diethylenglykol wurden mit 1 197 g ε-Caprolacton unter Stickstoff 5 Stunden bei 200°C umgesetzt. Das Rohprodukt wurde bei 0,3 mbar zweimal einer Kurzwegdestillation unterworden, wobei die Manteltemperatur im ersten Durchgang 100°C und im zweiten Durchgang 120°C betrug. Es wurde ein weitgehend Diethylenglykol-freies Esterdiol mit einer OH-Zahl von 421,5 erhalten.
   266 g dieses Esterdiols (2 Mol OH) wurden mit 1 718 g Hexamethylendiisocyanat vermischt und 6 g gasförmiger Chlorwasserstoff in die Mischung eingeleitet. Nach 8 Stunden Rühren bei 110°C war der NCO-Gehalt der Mischung auf 34,67 Gew.-% gesunken, was einer vollständigen Umsetzung der zunächst gebildeten Urethangruppen mit weiterem Isocyanat zu Allophanatgruppen entspricht.
   Nach zweimaliger Kurzwegdestillation bei 140°C und 0,5 mbar wurde ein monomerenarmes Polyisocyanat mit einer Viskosität von 2 970 mPa·s bei 25°C mit einerm NCO-Gehalt von 15,7 Gew.-% erhalten (= Isocyanat 1).
b) 40 g Isocyanat 1 wurden in 360 g einer Farbgeberlösung bestehend aus 345,6 g Di-isopropyl-naphthalin und 14,4 g einer Farbgebermischung bestehend aus 65 Gew.-% PERGASCRIPT® Schwarz 184, 7 Gew.-% PERGASCRIPT® Rot J6B, 15 Gew.-% PERGASCRIPT® Grün J2GN und 13 Gew.-% PERGASCRIPT® Blau SRB gelöst. Diese Lösung wurde bei 30°C in 541,9 g einer wäßrigen 1 gew.-%igen Polyvinylalkohollösung emulgiert. Hierzu wurde mit 4000 U/min gerührt. Bei Raumtemperatur wurden dann zu 700 g dieser Emulsion 43,2 g einer 9 gew.-%igen Diethylentriaminlösung zugefügt. Die mit der Aminlösung eingebrachten Amin-Äquivalente entsprachen genau den mit dem Isocyanat eingebrachten NCO-Äquivalenten.
   Innerhalb 1 Stunde wurde auf 55°C geheizt, anschließend bei gleicher Temperatur 4 Stunden gerührt und danach unter weiterem Rühren auf Raumtemperatur abgekühlt. Danach war die Harnstoffbildung abgeschlossen und nach 10-stündigem Rühren ließ sich kein freies Isocyanat mehr nachweisen.
   Es war eine 41 gew.-%ige Mikrokapseldispersion entstanden, die in herkömmlicher Weise auf Papier aufgestrichen werden konnte. Die entstandene Kaspseldispersion enthielt Kapseln mit einem mittleren Durchmesser von 9,8 µm.
c) Aus 12,9 g dieser Mikrokapseldispersion, 20,4 g einer Grundlösung (hergestellt aus 1 601,3 g demineralisiertem Wasser, 201,3 g Cellulosefasern des Typs Arbocell® DB 6 001 130 und 197,4 g Papierbinder des Typs Baystal® 8588) und 22 g demineralisiertem Wasser wurde eine Streichfarbe hergestellt und damit 1) aus ungestrichenem Basis-Papier ein CB-Papier und 2) aus einem mit einer sauer reagierenden Trägerschicht beschichteten Basis-Papier (CF-Papier) ein SC-Papier hergestellt. (Die Abkürzungen bedeuten: CB = coated back, CF = coated front und SC = self contained).
   Das CB-Papier ergab im Durchschreibetest eine Durchschrift, die eine Intensität von 40 % (bezogen auf nicht durchgeschriebenes Papier) aufwies.
d) Zur Überprüfung der Aufschließbarkeit der Kapseln wurde das SC-Papier 12 Stunden lang über Ammoniakdampf bei 50°C Hydrolysebedingungen ausgesetzt. Nach kurzem Liegen verfärbte es sich und hatte schließlich einen Remissionswert von 80 % (bezogen auf nicht diesen Bedingungen ausgesetztes SC-Papier). Dies zeigt, daß die gemäß b) hergestellten Mikrokapseln unter den Hydrolysebedingungen nicht beständig waren.
e) Eine nach dem Stand der Technik mit Hilfe von Bis-isocyanatohexyloxadiazin anstelle von Isocyanat 1 analog hergestellte Kapsel (Unterschied war die Umdrehungszahl beim Emulgieren - anstelle 4000 U/min nunmehr 8 000 U/min) zeigte nach einer d) entsprechenden Behandlung, daß, bezogen auf das nicht Hydrolysebedingungen ausgesetzte SC-Papier, nur 4 % des Lichtes remitiert wurden.

### Beispiel 2:

a) 2 565 g ε-Caprolacton wurden mit 1 005 g Trimethylolpropan 8 Stunden unter Stickstoff bei 200°C gerührt. Danach waren nur noch Spuren des monomeren Lactons nachweisbar. Der entstandene niedrigviskose Oligoester hatte eine OH-Zahl von 347.
   485 g (3 Mol OH) dieses Oligoesters wurden mit 1 260 g Hexamethylendiisocyanat 1 Stunde bei 65°C und 3 Stunden bei 80°C gerührt. Danach war der berechnete NCO-Gehalt von 28,9 Gew.-% erreicht.
   Nach zweimaliger Kurzwegdestillation wurde ein zähes Öl der Viskosität 29 250 mPa·s mit einem NCO-Gehalt von 9,9 Gew.-% erhalten. (Isocyanat 2)
b) 40 g Isocyanat 2 wurden mit 360 g der auch in Beispiel 1 verwendeten Farbgeberlösung vermischt und bei 6300 U/min in 558,8 g einer 1 gew.-%igen wäßrigen Polyvinylalkohollösung emulgiert. Die Emulsion wurde mit 3,7 g Diethylentriamin versetzt und wie in Beispiel 1 beschrieben nachbehandelt.
   Es resultierte eine 40 gew.-%ige Mikrokapseldispersion aus Kapseln mit einer mittleren Größe von 8,6 µm. Die Mikrokapseldispersion wurde in herkömmlicher Weise und wie in Beispiel 1 näher beschrieben auf Papier aufgestrichen.
   Im Durchschreibetest wurde ein Remissionswert von 38,1 % erzielt. Beim Test eines wie in Beispiel 1 hergestellten und mit Ammoniakdampf und unter Hydrolysebedingungen behandelten SC-Papiers wurde ein Remissionswert von mehr als 70 % gemessen, was einer fast vollständigen Zerstörung der Kapseln entspricht.

### Beispiel 3

12 g Bis-isocyanatohexyloxadiazin und 28 g Isocyanat 1 wurden mit 360 g der auch in Beispiel 1 verwendeten Farbgeberlösung vermischt und bei 5100 U/min in 536,9 g einer 1 gew.-%igen wäßrigen Polyvinylalkohollösung emulgiert. Daraufhin wurden 735,8 g der Emulsion mit 49,7 g einer 9 gew.-%igen Diethylentriaminlösung versetzt und wie in Beispiel 1 beschrieben nachbehandelt.

Es wurde eine 40 gew.-%ige Mikrokapseldispersion erhalten, deren Kapseln eine mittlere Größe von 8,9 µm aufwiesen. Wie in Beispiel 1 näher beschrieben, wurde die Mikrokapseldispersion in herkömmlicher Weise auf Papier aufgestrichen.

Im Durchschreibetest wurde ein Remissionswert von 37 % erzielt. Beim Test eines wie in Beispiel 1 hergestellten, mit Ammoniakdampf und unter Hydrolysebedingungen behandelten SC-Papiers wurde ein Remissionswert von 72,0 % gemessen. Dies entspricht einer fast vollständigen Zerstörung der Kapseln.

### Beispiel 4

38 g Bis-isocyanatohexyloxadiazin und 2 g Isocyanat 1 wurden mit 360 g der auch in Beispiel 1 verwendeten Farbgeberlösung vermischt und bei 8 000 U/min in 526 g einer 1 gew.-%igen wäßrigen Polyvinylalkohollösung emulgiert. Danach wurden 707,4 g der Emulsion mit 56,6 g einer 9 gew.-%igen Diethylentriaminlösung versetzt und wie in Beispiel 1 beschrieben nachbehandelt.

Es wurde eine 40 gew.-%ige Mikrokapseldispersion erhalten, die Kapseln enthielt mit einer mittleren Größe von 8,5 µm. Wie in Beispiel 1 naher beschrieben, wurde die Mikrokapseldispersion in herkömmlicher Weise auf Papier aufgestrichen.

Ein Remissionswert von 42 % wurde beim Durchschreibetest erzielt. Beim Test eines wie in Beispiel 1 hergestellten, mit Ammoniakdampf und unter Hydrolysebedingungen behandeltem SC-Papier wurde ein Remissionswert von mehr als 10 % gemessen, was einem hohen Grad von zerstörten Kapseln entspricht.

Dies zeigt, daß bei einem Anteil von nur 2 g (5 %) Isocyanat 1 der Remissionswert mehr als doppelt so hoch ausfällt, wie beim Einsatz von 100%-igem Bisisocyanatohexyloxadiazin.

## Patentansprüche

1. Mikrokapseln mit Wänden, die nach dem Polyadditionsverfahren aus Polyisocyanaten und Polyaminen erhältlich sind und eine terminierbare Festigkeit aufweisen, dadurch gekennzeichnet, daß bei ihrer Herstellung als mindestens bifunktionelle Isocyanate, solche (mit-)verwendet werden, die im Mittel pro Mol mindestens eine Ester- und/oder Amidgruppe in der Hauptkette enthalten.

2. Mikrokapseln nach Anspruch 1, dadurch gekennzeichnet, daß bei ihrer Herstellung Isocyanate oder Isocyanatgemische eingesetzt werden, die 100 bis 1 Gew.-% Isocyanate, die im Mittel pro Mol mindestens eine Ester- und/oder Amidgruppe in der Hauptkette enthalten und 0 bis 99 Gew.-% für die Herstellung von Mikrokapseln bekannte, mindestens bifunktionelle Isocyanate enthalten.

3. Mikrokapseln nach Ansprüchen 1 und 2, dadurch gekennzeichnet, daß die Isocyanate teilweise mit zur Salzbildung befähigten und/oder hydrophilierend wirkenden Verbindungen umgesetzt worden sind.

4. Mikrokapseln nach Anspruch 3, dadurch gekennzeichnet, daß als hydrophilierend wirkende Verbindung Polyetherketten eingesetzt werden.

5. Mikrokapseln nach Ansprüchen 1 bis 4, dadurch gekennzeichnet, daß sie als eingekapselte Materialien in Leukoform vorliegende Farbstoffe, Parfumöle, Pflanzenschutzmittel, Reaktivkleber oder Pharmazeutika enthalten.

6. Mikrokapseln nach Anspruch 5, dadurch gekennzeichnet, daß sie als in Leukoform vorliegende Farbstoffe Triphenylmethanverbindungen, Diphenylmethanverbindungen, Xanthenverbindungen, Benzoxazinverbindungen, Thiazinverbindungen und/oder Spiropyranverbindungen enthalten.

7. Mikrokapseln nach Ansprüchen 1 bis 6, dadurch gekennzeichnet, daß sie als hydrophobe Lösungsmittel chloriertes Diphenyl, chloriertes Paraffin, Baumwollsamenöl, Erdnußöl, Palmöl, Trikresylphosphat, Silikonöl, Dialkylphthalate, Dialkyladipate, teilhydrierte Terphenyle, alkyliertes Diphenyl, alkyliertes Naphthalin, Diarylether, Arylalkylether und/oder höher alkyliertes Benzol, gegebenenfalls im Gemisch mit Kerosin, Paraffinen und/oder Isoparaffinen, enthalten.

8. Verwendung von Mikrokapseln der Ansprüche 1 bis 7, die in Leukoform vorliegende Farbstoffe enthalten, zur Herstellung von kohlefreien Durchschreibepapieren.
